## Europäisches Patentamt
## European Patent Office
## Office européen des brevets

(19)

(11) Veröffentlichungsnummer: **0 026 395**
**B1**

(12) # EUROPÄISCHE PATENTSCHRIFT

(45) Veröffentlichungstag der Patentschrift:
16.05.84

(51) Int. Cl.³: **H 04 N 5/14**, H 04 N 7/00

(21) Anmeldenummer: 80105561.7

(22) Anmeldetag: 17.09.80

(54) Verfahren und Schaltungsanordnung zur kompatiblen Auflösungserhöhung bei Fernsehsystemen.

(30) Priorität: 21.09.79 DE 2938349

(43) Veröffentlichungstag der Anmeldung:
08.04.81 Patentblatt 81/14

(45) Bekanntmachung des Hinweises auf die Patenterteilung:
16.05.84 Patentblatt 84/20

(84) Benannte Vertragsstaaten:
AT BE CH FR GB IT LI NL SE

(56) Entgegenhaltungen:
DE - A - 2 350 018
DE - A - 2 551 664
FR - A - 1 153 591
FR - A - 2 371 837
US - A - 3 051 778

(73) Patentinhaber: ANT Nachrichtentechnik GmbH,
Gerberstrasse 33, D-7150 Backnang (DE)

(72) Erfinder: Wendland, Broder, Prof.-Dr.-Ing., Am
Stadtgarten 58, D-4355 Waltrop (DE)

(74) Vertreter: Schickle, Gerhard, Dipl.-Ing., ANT
Nachrichtentechnik GmbH Patent- und Lizenzabteilung
Gerberstrasse 33, D-7150 Backnang (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Verfahren und Schaltungsanordnung zur kompatiblen Auflösungserhöhung bei Fernsehsystemen

Die Erfindung betrifft ein Verfahren und eine Schaltungsanordnung zur kompatiblen Auflösungserhöhung bei Fernsehsystemen für Schwarz-Weiß- und Farbbildübertragung, bei denen das Leuchtdichtesignal einer Signalquelle zeilenweise mit Zeilensprung abgetastet wird.

Der Stand der Technik ist gegeben durch die heute eingesetzten Schwarz/Weiß-Systeme sowie PAL-Farbfernsehsystemen, SECAM- und NTSC- und ist dargestellt in R. Theile, Fernsehtechnik, Springer-Verlag, Berlin-Heidelberg-New York 1973.

Diese derzeitigen Fernsehsysteme sind in bezug auf die Wiedergabequalität der übertragenen Bilder nicht ideal. Die Mängel sind insbesondere unzureichende Detailauflösung, störendes Zeilenflimmern, Zeilenwandern, und 25-Hz-Flackern an horizontalen Konturen.

Neue Systemanwendungen wie Videotext, Bildschirmtext, Festbildübertragung, Heimterminal ect. lassen gerade diese Mängel verstärkt hervortreten. So sind Fernsehraster-Displays für »Computer Graphics« oder für »Information Retrieval«, ect. nahezu ungeeignet. Langfristig gesehen erscheint aber eine einheitliche Display-Technik für alle diese angesprochenen Anwendungen wünschenswert.

Weiterhin stellt der Trend zu immer größeren und helleren Bildschirmen erhöhte Anforderungen an Detailauflösung und Flimmerfreiheit. Die Forderung nach erhöhter Detailauflösung gilt insbesondere für die Großbilddarstellung z. B. mit Projektionseinrichtungen oder großen Flachdisplays.

Bekannt ist ein Bildanalysator (DE-OS 23 50 018), bei dem abwechselnd Halbbilder in je einen Speicher eingelesen werden. Durch zeilenweises Umschalten zwischen den Speichern beim Auslesen ergibt sich ein Vollbild in demjenigen Zeitraum, in welchem zwei Halbbilder eingelesen werden. Auf diese Weise wird die Bildauflösung nur scheinbar erhöht, (indem beispielsweise Kantenflimmern vermieden wird), aber das gesamte Flimmern wird verstärkt, weil statt einer Halbbildfrequenz von beispielsweise 50 Hz jetzt nur noch die Vollbildfrequenz von 25 Hz auftritt.

Bei der Anordnung nach der US-PS 30 51 778 wird nun ein einzelnes Halbbild — somit nur die Hälfte aller Bildzeilen — anstelle zweier Halbbilder übertragen. Die Bildabtastung erfolgt dabei mit der ursprünglichen, schmalen Spotbreite des Elektronenstrahls in der Aufnahmeröhre, d. h. so breitbandig, wie es einer Abtastung mit voller Zeilenzahl zukommt. Es wird also bei gleicher Bandbreite nur die Hälfte aller Zeilen (erstes Halbbild) übertragen. Die normalerweise eingefügte andere Hälfte (zweites Halbbild) wird weggelassen. Dies bedeutet prinzipiell eine Verschlechterung der Auflösung und eine Verletzung des Abtasttheorems, die zwangsläufig Abtastfehler (aliasing) erzeugt (siehe z. B. die Veröffentlichung: Arp, F: eine verallgemeinerte Theorie der Bildabtastung 1. AEÜ 23 (1969), Seiten 187 bis 200).

Empfängerseitig erfolgt dann eine lineare Interpolation, d. h. eine Errechnung neuer Zeilen zwischen den übertragenen Zeilen. Diese neuen Zeilen stellen keine zusätzliche Information dar. Anschließend erfolgt eine Wiedergabe des übertragenen Halbbildes und der errechneten Zeilen. Diese liegen zu den übertragenen Bildpunkten in Offsetlage. Die Wiedergabe erfolgt mit einem synchron gewobbelten Elektronenstrahl im Monitor, der zwischen diesen Bildpunkten hin- und herbewegt wird und dabei die jeweilige Bildinformation enthält, aber auch die zwangsläufig mit Fehlern behafteten, errechneten Signale. Eine solche Interpolation auf der Empfängerseite und die Wiedergabe von übertragenen und von zusätzlichen interpolierten Bildpunkten in Offsetlage führt nicht zur Auflösungserhöhung.

Bekannt ist schließlich noch aus der DE-OS 25 51 664 ein kompatibles Bildfernsprechsystem, bei dem senderseitig ein hochaufgelöstes Signal in Form von Bildpunkten in Offsetlage gebildet und übertragen wird, und zwar über einen Schmalbandkanal. Dabei wird die Offsetlage zyklisch so variiert, daß nach Ablauf des Zyklus ein hochaufgelöstes Signal zur Verfügung steht und jede Einzelübertragung im Zyklus ein Signal darstellt, das ein Schmalbandempfänger empfangen kann. Es handelt sich somit um eine sequentielle Übertragung eines hochaufgelösten Bildes, bei der jedes Teilbild des Zyklus ein niedrig aufgelöstes Bild für einen Schmalbandempfänger darstellt. Diese Technik liefert ein hochaufgelöstes Bild nach einem vollständigen Zyklus. Bekannt ist damit im Prinzip die Offsetabtastung und die Zusammenfügung neuer Teilbilder mit versetzten Rastern in Offsetlage.

Aufgabe der Erfindung ist es, ein Verfahren gemäß dem Oberbegriff des Patentanspruches 1 anzugeben, welches durch Maßnahmen am Fernsehsender und am Fernsehempfänger eine geeignete Signalvorverarbeitung und Signalnachverarbeitung ermöglicht, um insbesondere die bei bestehenden Übertragungskanälen und beibehaltener Kompatibilität zu bestehenden Empfängergenerationen für geeignet eingerichtete Empfangsgeräte die Bildqualität sowohl bezüglich der Auflösung als auch bezüglich des Flimmerns zu verbessern.

Diese Aufgabe wird gelöst durch die Merkmale des Patentanspruches 1. In den Unteransprüchen sind vorteilhafte Weiterbildungen dieses Verfahrens sowie Schaltungsanordnungen angegeben.

Ziel ist es dabei, eine hohe Detailauflösung zu erreichen und Flimmereffekte zu vermeiden. Für Monitordarstellung üblicher Bildschirmgröße ergeben sich daraus: bessere Lesbarkeit und ermüdungsfreies Lesen und bei Großbilddarstellung wird ein größerer Betrachtungswinkel bei größerem Beobachtungsabstand möglich, was eine erhebliche subjektive Qualitätsverbesserung bewirkt.

Die Erfindung soll jetzt anhand der Figuren näher erläutert werden. Die Figuren zeigen

Fig. 1 ein Übersichtschaltbild einer Anordnung nach der Erfindung,

Fig. 2 die räumliche Anordnung der abgetasteten Bildpunkte,

Fig. 3 die Übertragungsfunktion der Übertragungsstrecke,

Fig. 4 eine erste mögliche Ausführungsform des Bildspeichers,

Fig. 5 eine zweite mögliche Ausführungsform des Bildspeichers,

Fig. 6 die räumliche Anordnung der Bildpunkte auf einem Monitor bei Wobbelung des Wiedergabestrahls,

Fig. 7 die Ausführung eines Abtasters,

Fig. 8 die Ausführung einer Bildspeichertaktzentrale.

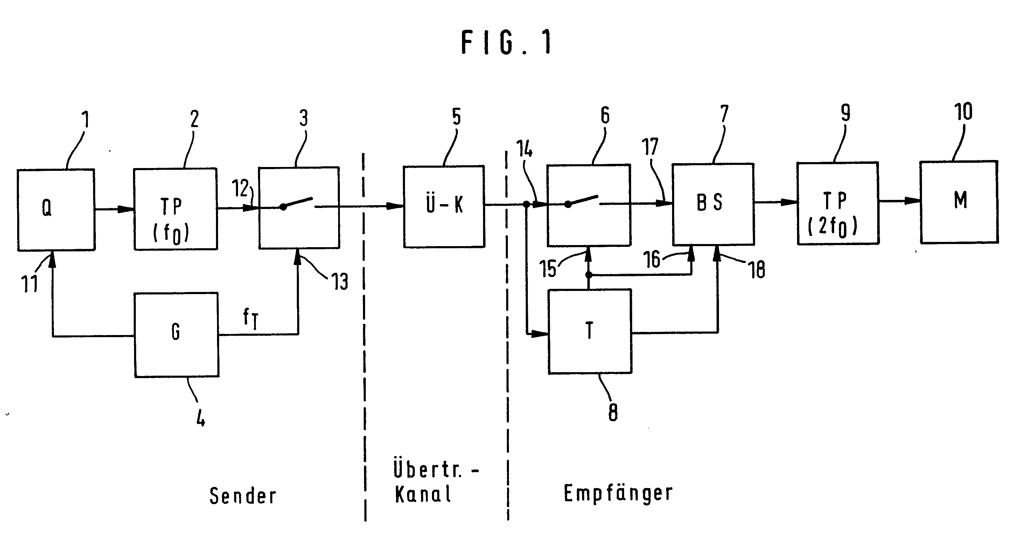

In Fig. 1 wird gezeigt, daß senderseitig das Leuchtdichtesignal der Signalquelle 1 einem Sende-Tiefpaß 2 zugeführt ist, dessen Ausgangssignal am Signaleingang 12 eines Sendeabtasters 3 liegt, und daß ein Taktgenerator 4 einerseits Synchronsignale an den Eingang 11 der Signalquelle 1 und andererseits einen zeilenverkoppelten Abtasttakt an den Steuereingang 13 des Sendeabtasters 3 liefert.

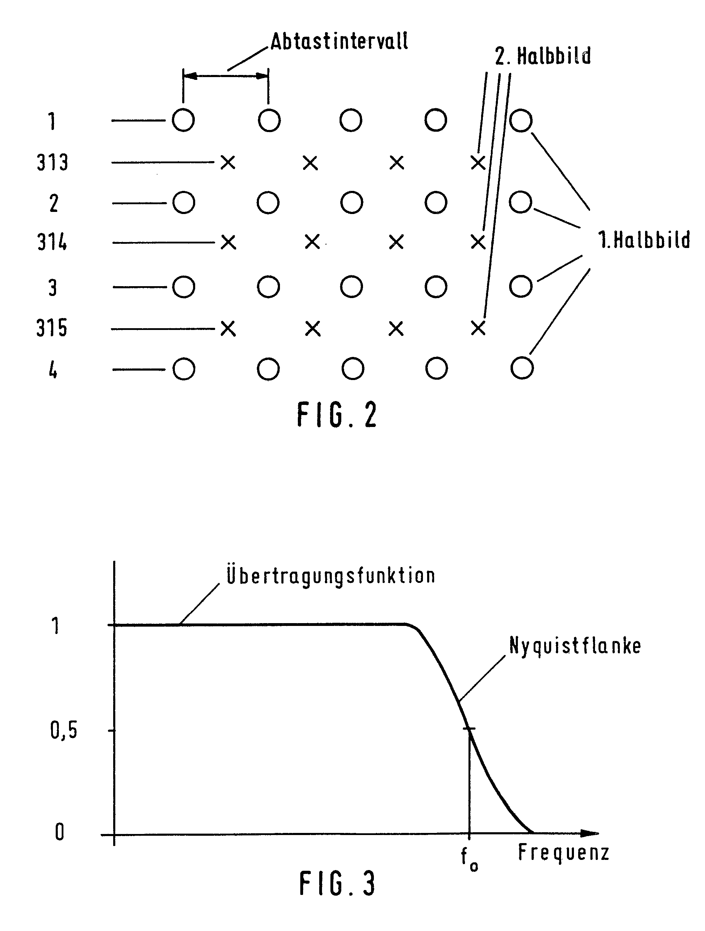

Der Sendeabtaster 3 erzeugt Abtastproben während eines jeden ersten Halbbildes und dazu die um ein halbes Abtastintervall versetzten Abtastproben während jedes zweiten Halbbildes, wie Fig. 2 zeigt.

Diese Abtastproben werden an den Übertragungskanal 5 abgegeben, der ein Nyquistflanke bei der Frequenz $f_0$ nach Fig. 3 aufweist. Der zeilenverkoppelte Abtasttakt $f_T$ ist doppelt so hoch wie die Frequenz $f_0$ ($f_T = 2 f_0$, Nyquistrate). Auf der Empfängerseite synchronisieren die Synchronimpulse im Empfangssignal eine Taktzentrale 8, die entsprechend dem Taktgenerator 4 Abtasttakte in Offsetlage erzeugt und über den Steuereingang 15 eines Empfängerabtasters 6 die Abtastung der am Signaleingang 14 des Empfängerabtasters 6 liegenden Empfangssignale und weiter die Einlesung der Abtastwerte am Signaleingang 17 eines Bildspeichers 7 über einen Steuereingang 16 steuert. Eine Taktzentrale 8 steuert über einen Steuereingang 18 des Bildspeichers 7 die Synchronität der Bildeinlesung und der doppelt schnellen Bildauslesung.

Die Ausgangssignale des Bildspeichers 7 werden einem Empfänger-Tiefpaß 9 zugeführt, wobei dieser die doppelte Grenzfrequenz des Sende-Tiefpasses 2 aufweist, und die vom Empfänger-Tiefpaß 9 gefilterten Abtastwerte werden einem Monitor 10 zugeführt.

Die Quelle 1 kann beispielsweise eine Fernsehkamera sein, die einen Taktgenerator enthält, der zum Ausführen des erfindungsgemäßen Verfahrens einen zusätzlichen Ausgang benötigt, der einen zeilenverkoppelten Abtasttakt mit der Offsetlage nach Fig. 2 liefert. Der Sende-Tiefpaß 2 kann dadurch realisiert sein, daß eine reale Kamera verwendet wird mit einer oberen Grenzfrequenz für die Kameraabtastung.

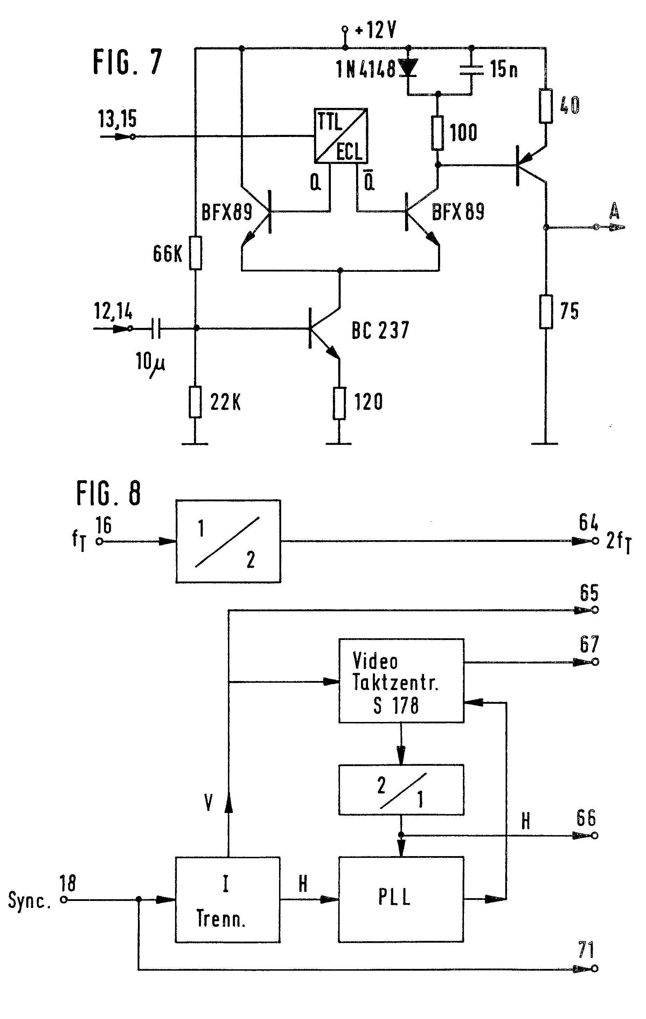

In Fig. 7 ist ein Abtaster dargestellt, wie er zur Durchführung des erfindungsgemäßen Verfahrens sowohl im Sender 3 als auch im Empfänger 6 benutzt wird.

Bei geeignetem Analog-Digital-Umsetzer 30, der eine genügend kleine Aperturzeit besitzt (ca. 1 nsec), könnte der Sende-Abtaster 6 entfallen.

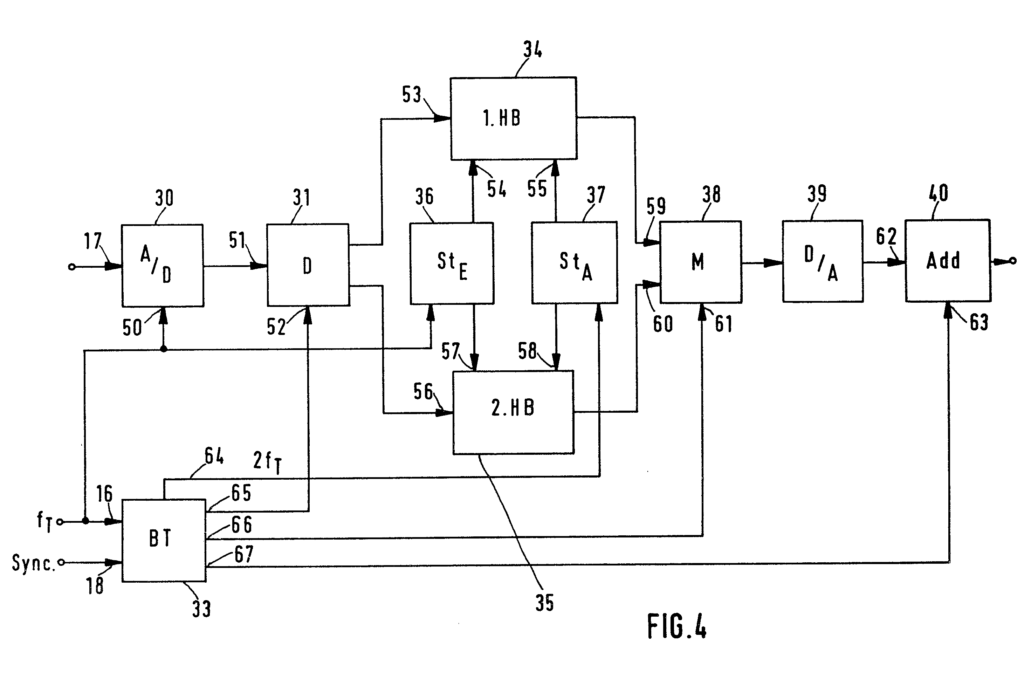

Eine günstige Ausführung der flimmerfreien Bilddarstellung mit erhöhter Auflösung ergibt sich entsprechend der Darstellung nach Fig. 4.

Der Bildspeicher nach Fig. 4 erhält am Eingang 17 des Analog-Digital-Umsetzers 30 die Abtastwerte des Empfangssignals. Die Bildspeichertaktzentrale 33 erzeugt aus dem Abtasttakt $f_T$ am Eingang 16 und dem Bildsynchronsignal am Eingang 18 den gegenüber dem Abtasttakt in der Frequenz verdoppelten Auslesetakt am Ausgang 64. Dieser Takt ist verkoppelt mit dem Halbbildtakt am Ausgang 65, der Zeilenfrequenz am Ausgang 66 und dem Synchrongemisch am Ausgang 67 für die doppelt schnelle Auslesung.

Der Abtasttakt am Eingang 16 der Bildspeichertaktzentrale 33 ist dem Steuereingang 50 des Analog-Digital-Umsetzers 30 zugeführt. Die digitalen Ausgangssignale des Analog-Digital-Umsetzers 30 sind über den Signaleingang 51 einem Demultiplexer 31 zugeführt, dessen Steuereingang 52 den Halbbildtakt von der Bildspeichertaktzentrale erhält.

Die dem ersten Halbbild zugehörigen Signale sind über den Signaleingang 53 einem ersten Halbbildspeicher 34 und die dem zweiten Halbbild zugehörigen Signale dem zweiten Halbbildspeicher 35 zugeführt.

Die Einlesesteuerung 36, die an ihrem Eingang den Abtasttakt vom Eingang 16 der Bildspeichertaktzentrale erhält, erzeugt die den jeweiligen Halbbildern zugehörigen Speicheradressen und Steuerbefehle.

Diese Speicheradressen sind den Steuereingängen 54 bzw. 57 des Halbbildspeichers 34 bzw. 35 zugeführt. Die Auslesesteuerung 37, die an ihrem Eingang den gegenüber dem Abtasttakt in der Frequenz verdoppelten Auslesetakt vom Ausgang 64 der Bildspeichertaktzentrale 33 erhält, erzeugt die den jeweiligen auszulesenden Teilen zugeordneten Speicheradressen und Steuerbefehle.

Diese Speicheradressen sind den Steuereingängen 55 bzw. 58 des Halbbildspeichers 34 bzw. 35 zugeführt. An den Ausgängen der beiden Halbbildspeicher liegen in der Zeilendauer einer eingelesenen Zeile jeweils eine Zeile des ersten Halbbildes und eine Zeile des zweiten Halbbildes nacheinander an.

Diese Ausgangssignale der beiden Halbbildspeicher sind jeweils den Signaleingängen 59 und 60 des Multiplexers 38 zugeführt. Am Steuereingang 61 des Multplexers 38 liegt die Zeilenfrequenz vom Ausgang 66 der Bildspeichertaktzentrale 33 an. Das Ausgangssignal des Multiplexers 38 ist einem Digital-Analog-Wandler 39 zugeführt, dessen Ausgangssignal einem Eingang 62 einer Addierstufe 40 zugeführt ist, die an ihrem anderen Eingang 63 das Synchrongemisch für die doppelt schnelle Auslegung vom Ausgang 67 der Bildspeichertaktzentrale 33 erhält und an ihrem Ausgang das verbesserte Bildsignal an den Empfänger-Tiefpaß 9 nach Fig. 1 mit doppelter Zeilenfrequenz und einfacher Bildfrequenz in Vollbilddarstellung abgibt. Bisher wurden zum Erzeugen eines Vollbildes mit doppelter Zeilenfrequenz und einfacher Bildfrequenz Zeilen als Halbbildelemente verwendet.

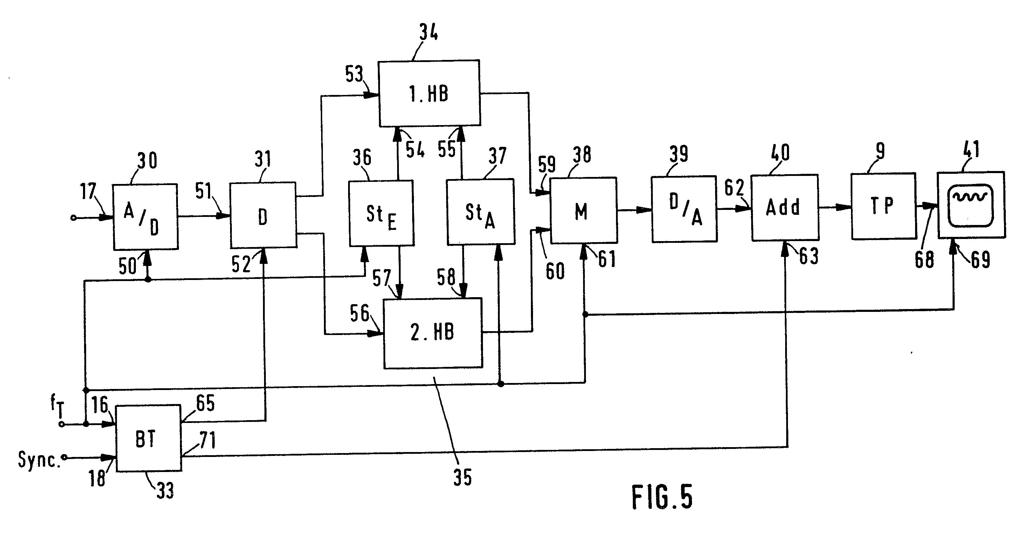

Als Alternative dazu zeigt Fig. 5 eine günstige Ausführungsform für eine flimmerfreie Auflösungserhöhung. Hierbei werden zum Erzeugen eines Vollbildes mit doppelter Zeilenzahl Bildpunkte als Halbbildelemente verwendet. Der Bildspeicher nach Fig. 5 erhält am Signaleingang 17 des Analog-Digital-Umsetzers 30 die Abtastwerte des Empfangssignals (Bildpunkte). Die Bildspeichertaktzentrale 33 erzeugt aus dem Abtasttakt $f_T$ am Eingang 16 und dem Bildsynchronsignal am Eingang 18 den Halbbildtakt am Ausgang 65 und das Synchrongemisch am Ausgang 71; der Abtasttakt am Eingang 16 der Bildspeichertaktzentrale 33 ist dem Steuereingang 50 des Analog-Digital-Umsetzers 30 zugeführt.

Die digitalen Ausgangssignale des Analog-Digital-Umsetzers 30 sind über den Signaleingang 51 einem Demultiplexer 31 zugeführt, dessen Steuereingang 52 den Halbbildtakt von der Bildspeichertaktzentrale erhält.

Die dem ersten Halbbild zugehörigen Signale (Bildpunkte) sind über den Signaleingang 53 einem ersten Halbbildspeicher 34 und die dem zweiten Halbbild zugehörigen Signale über den Signaleingang 56 einem zweiten Halbbildspeicher 35 zugeführt.

Die Einlesesteuerung 36, die an ihrem Eingang den Abtasttakt des Eingangssignals am Eingang 16 der Bildspeichertaktzentrale erhält, erzeugt die den jeweiligen Halbbildern zugehörigen Speicheradressen und Steuerbefehle.

Diese Speicheradressen sind den Steuereingängen 54 bzw. 57 des Halbbildspeichers 34 bzw. 35 zugeführt.

Die Auslesesteuerung 37, die an ihrem Eingang den Abtasttakt erhält, erzeugt die den jeweiligen auszulesenden Zeilen zugeordneten Speicheradressen und Steuerbefehle.

Diese Speicheradressen sind den Steuereingängen 55 bzw. 58 des Halbbildspeichers 34 bzw. 35 zugeführt. An den Ausgängen der beiden Halbbildspeicher liegen jeweils eine Zeile des ersten Halbbildes und eine Zeile des zweiten Halbbildes an. Diese Ausgangssignale der beiden Halbbildspeicher sind jeweils den Signaleingängen 59 und 60 des Multiplexers 38 zugeführt. Am Steuereingang 61 des Multplexers 38 liegt der Abtasttakt $f_T$ an, der alternierend einen Punkt einer Zeile im ersten Halbbild (erstes Halbbildelement) und den benachbarten Punkt der nächsten örtlich benachbarten Zeile des anderen Halbbildes auf seinen Ausgang durchschaltet.

Bei gleicher Zeilenfrequenz $f_T$ erscheinen am Multiplexerausgang auf diese Weise während einer Halbbilddauer alle Bildpunkte beider Halbbilder.

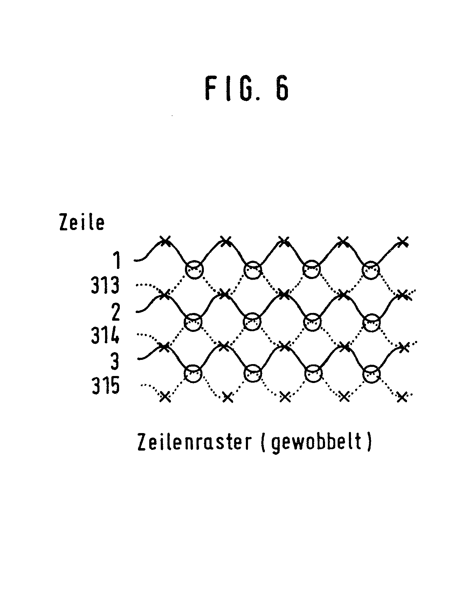

Das Ausgangssignal des Multiplexers 38 ist einem Digital-Analog-Wandler 39 zugeführt, dessen analoges Ausgangssignal an einem Eingang 62 einer Addierstufe 40 liegt, die an ihrem anderen Eingang 63 das Synchrongemisch am Ausgang 71 der Bildspeichertaktzentrale 33 erhält und an ihrem Ausgang das verbesserte Bildsignal an den Empfänger-Tiefpaß 9 abgibt. Das tiefpaßbegrenzte Signal ist einem Signaleingang 68 eines spotwobbelbaren Monitors 41 und der Abtasttakt $f_T$ einem weiteren Steuereingang 69 des Monitors 41 zugeführt. Der Abtasttakt $f_T$ synchronisiert die Wobbeleinrichtung des Monitors und der Spot des Wiedergabestrahls im Monitor 41 ist zusätzlich vertikal entsprechend Fig. 6 gewobbelt.

Bei dieser Alternativlösung nach Fig. 6 wird also vorgeschlagen, den Elektronenstrahl der Bildröhre durch eine Vorrichtung, z. B. ein Magnetfeld, derart zu wobbeln, daß bei einem Zeilendurchlauf die Bildpunkte einer Zeile an den zugehörigen Stellen erscheinen und die Bildpunkte der benachbarten Zeilen vertikal örtlich versetzt geschrieben werden, wie dies in Fig. 6 dargestellt ist.

Vorstehende Schaltungsanordnung zur Auflösungserhöhung läßt sich vorteilhaft auch bei Fernseh-Aufzeichnungsverfahren und deren Wiedergabe und bei Fernsehtelefon-Systemen einsetzen.

Die Bildspeichertaktzentrale ist in Fig. 8 dargestellt und beispielsweise wie folgt aufgebaut:

Eine übliche Frequenzverdopplerschaltung liegt zwischen dem Eingang 16 und dem Ausgang 64. Am Eingang 18 liegt eine Impulstrennstufe, deren Horizontal-Ausgang H auf eine Phase-looked-loop-Schaltung PLL führt, die eine Ausgangsfrequenz von 2 MHz aufweist, deren Ausgang eine Video-Taktzentrale ansteuert, die unter der Bezeichnung »Video-Taktzentrale« S 178 von der Firma Siemens AG hergestellt wird. Diese Taktzentrale wird außerdem angesteuert durch den Vertikal-Impuls am Ausgang der Impulstrennstufe I Trenn.

Die Video-Taktzentrale erzeugt aus den Ansteuersignalen das Synchrongemisch am Ausgang 67 mit doppelter Zeilenfrequenz und gleicher Bildfrequenz und stellt über einen zusätzlichen Frequenzteiler 2 : 1 der PLL-Schaltung die Vergleichs-Horizontal-Impulse zur Verfügung, die durch die PLL-Schaltung auf die Horizontal-Impulse aus der Impulstrennstufe synchronisiert werden. Die Horizontal-Impulse aus dem zusätzlichen Frequenzteiler 2 : 1 werden auf den Ausgang 66 gegeben. Der Eingang 18, an dem das Bildsynchronsignal liegt, ist direkt mit dem Ausgang 71 verbunden. Das Vertikalsignal aus der Impulstrennstufe ist auf den Ausgang 65 geführt. Die Klemmenbezeichnungen sind die gleichen wie in den Fig. 1, 4 und 5.

## Patentansprüche

1. Verfahren zur kompatiblen Auflösungserhöhung bei Fernsehsystemen für Schwarz-Weiß- und Farbbildübertragung, bei denen das Leuchtdichtsignal in einer Signalquelle (1) zeilenweise mit Zeilensprung erzeugt wird und nach Begrenzen in einem Tiefpaß (2) auf der Sendeseite in einem Sendeabtaster (3) synchron zur Zeilenfrequenz örtlich benachbarte Zeilen mit einer Frequenz $f_T$ periodisch abgetastet werden, das periodisch abgetastete Signal über einen Übertragungskanal (5) übertragen wird, der eine Frequenz $f_0$ bei seiner Nyquistflanke aufweist, und empfangsseitig die die Halbbilder nach ihrem zeitlichen Auftreten getrennt in zwei Halbbildspeichern (34, 35) digital gespeichert werden und abwechselnd aus einem Halbbildspeicher (34) Halbbildelemente in Form von Zeilen oder Bildpunkten und aus dem anderen Halbbildspeicher (35) diesen Halbbildelementen benachbarte Halbbildelemente in Form von Zeilen oder Bildpunkten ausgelesen werden und diese Halbbildelemente (Zeilen oder Bildpunkte) in der Reihenfolge ihres Auslesens zusammengeführt werden, so daß ein Vollbild entsteht, wobei die in Form digitaler Signale zusammengeführten Halbbildelemente (Zeilen oder Bildpunkte) in einem D/A-Wandler (39) in analoge Bildsignale umgewandelt werden und das dazugehörige Synchrongemisch hinzugefügt wird, gekennzeichnet durch folgende Merkmale:

a) sendeseitig werden örtlich benachbarte Zeilen (1, 313 ...) um das halbe Abtastintervall zwischen zwei Bildpunkten horizontal versetzt mit einer Frequenz $f_T$, eines zeilenverkoppelten Abtasttaktes, die doppelt so hoch ist wie die Nyquistfrequenz $f_0$ des Übertragungskanals (5), abgetastet,

b) empfangsseitig wird das empfangene Signal synchron zum Takt auf der Sendeseite, versetzt um die Laufzeit des Übertragungskanals (5) abgetastet, werden die örtlich benachbarten Halbbildelemente (Zeilen oder Bildpunkte) mit doppelter Geschwindigkeit wie beim Einlesen ausgelesen, wobei beim Auslesen in der Reihenfolge des Auftretens neuer Zeileninhalte jeweils an den Signaleingängen der beiden Halbbildspeicher (34, 35) diese neuen Zeileninhalte alternierend eingelesen und während der Zeit des Einlesens eines neuen Vollbildes die Halbbildspeicher (34, 35) mit deren jeweiligem Inhalt zweimal so ausgelesen, daß ein Vollbildsignal für den Wiedergabemonitor entsteht, das bei gleich bleibender Bildfrequenz die doppelte Zeilenzahl aufweist, und wird den ausgelesenen Bildsignalen ein Synchrongemisch mit doppelter Zeilenfrequenz und einfacher Bildfrequenz zugefügt.

2. Verfahren nach Anspruch 1, dadurch gekennzeichnet, daß zum Erzeugen eines Vollbildes mit doppelter Zeilenfrequenz und einfacher Bildfrequenz Zeilen als Halbbildelemente verwendet werden.

3. Verfahren nach Anspruch 1, dadurch gekennzeichnet, daß zum Erzeugen eines Vollbildes mit doppelter Zeilenzahl Bildpunkte als Halbbildelemente verwendet werden und jede Zeile die Bildpunkte aus zwei örtlich benachbarten Zeilen des gespeicherten Bildes enthält, so daß in einem Wiedergabemonitor (10), dessen Wiedergabestrahl zusätzlich vertikal gewobbelt wird, bei einem Zeilendurchlauf jeder zweite Bildpunkt an der zugehörigen Stelle einer Zeile erscheint während die dazwischen liegenden Bildpunkte in der örtlich benachbarten Zeile vertikal versetzt geschrieben werden.

4. Schaltungsanordnung zur Durchführung eines Verfahrens für die kompatible Auflösungserhöhung bei Fernsehsystemen für Schwarz-Weiß- und Farbbildübertragung nach einem der Ansprüche 1 bis 3, bei denen das Leuchtdichtsignal einer Signalquelle zeilenweise mit Zeilensprung abgetastet wird, ein Sendeabtaster (3) vorgesehen ist und bei denen ein Ausgang eines Taktgenerators (4), der einen zeilenverkoppelten Abtasttakt der Frequenz $f_T$ liefert, mit dem Steuereingang (13) des Sendeabtasters (3) verbunden ist, derart, daß der Sendeabtaster (3) Abtastproben (3) während des ersten Halbbildes und dazu die um ein halbes Abtastintervall versetzten Abtastproben während eines anderen Halbbildes an einen Übertragungskanal (5) abgibt, wobei am Signaleingang (14) eines Empfängers eine Taktzentrale (8) und ein Empfängerabtaster (6) liegen und die Taktzentrale (8) durch Synchronimpulse im Empfangssignal synchronisiert wird und entsprechend dem Taktgenerator (4) Abtasttakte in Offsetlage an Ausgängen erzeugt, von denen der erste Ausgang an den Steuereingang (15) des Empfängerabtasters (6) und an einen ersten Steuereingang (16) eines Bildspeichers (7) und der zweite Ausgang an einen zweiten Steuereingang (18) des Bildspeichers (7) gelegt ist, so daß das Eingangssignal in den Bildspeicher (7) eingelesen und dazu synchron doppelt so schnell ausgelesen wird, dadurch gekennzeichnet, daß sendeseitig das Leuchtdichtesignal vor dem Signaleingang (12) des Sendeabtasters (3) einen Tiefpaß durchläuft, der die Frequenz $f_0$ der Nyquistflanke als Grenzfrequenz aufweist, und daß empfangsseitig, das Ausgangssignal des Bildspeichers (7) über einen Empfänger-Tiefpaß (9), der die doppelte Grenzfrequenz des Sender-Tiefpasses (2) aufweist, einem Monitor (10) zugeführt ist.

5. Schaltungsanordnung nach Anspruch 4, dadurch gekennzeichnet,
daß der Bildspeicher (7) an seinem Signaleingang (17) einen Analog-Digital-Umsetzer (30) aufweist, der die Abtastwerte des Empfangssignals umwandelt und dessen Steuereingang (50) mit dem ersten Steuereingang (16) der Bildspeichertaktzentrale (33) verbunden ist, an die auch der zweite Steuereingang (18) des Bildspeichers (7) führt,
daß dem Analog-Digital-Umsetzer (30) ein Demultiplexer (31) nachgeschaltet ist, dessen Steuereingang (52) mit einem ersten Ausgang (65) der Bildspeichertaktzentrale (33) verbunden ist, der die Halbbildtaktfrequenz liefert,

daß ein erster Ausgang des Demultiplexers (31) am Signaleingang (53) eines ersten Halbbildspeichers (34) und ein zweiter Ausgang des Demultiplexers (31) am Signaleingang (56) eines zweiten Halbbildspeichers (35) liegt,

daß der Steuereingang einer Einlesesteuerung (36) mit dem ersten Steuereingang (16) des Bildspeichers (7) verbunden ist und je ein Ausgang der Einlesesteuerung (36) mit einem ersten Steuereingang (54 bzw. 57) der beiden Halbbildspeicher (34, 35) verbunden ist,

daß der Steuereingang einer Auslesesteuerung (37) mit einem zweiten Ausgang (64) der Bildspeichertaktzentrale (33), der eine Auslesefrequenz, verbunden ist und je ein Ausgang dieser Auslesesteuerung (37) mit einem zweiten Steuereingang (55 bzw. 58) der beiden Halbbildspeicher verbunden ist,

daß die Ausgänge der Halbbildspeicher (34, 35) auf jeweils einen Signaleingang (59, 60) eines Multiplexers (38) führen, dessen Steuereingang (61) mit einem dritten Ausgang (66) der Bildspeichertaktzentrale (33) verbunden ist, der die Zeilentaktfrequenz liefert,

daß am Ausgang der Halbbildspeicher (34, 35) auf jeweils einen Signaleingang (59, 60) eines Multiplexers (38) führen, dessen Steuereingang (61) mit einem dritten Ausgang (66) der Bildspeichertaktzentrale (33) verbunden ist, der die Zeilentaktfrequenz liefert,

daß am Ausgang des Multiplexers (38) über einen Digital-Analogwandler (39) ein erster Eingang (62) einer Addierstufe (40) angeschlossen ist, an deren anderen Eingang (63) ein vierter Ausgang (67) der Bildspeichertaktzentrale (3) gelegt ist, der das zugehörige Synchrongemisch liefert.

6. Schaltungsanordnung nach Anspruch 4, dadurch gekennzeichnet,

daß der Bildspeicher (7) an seinem Signaleingang (17) einen Analog-Digital-Umsetzer (30) aufweist, der die Abtastwerte des Empfangssignals umwandelt, und dessen Steuereingang (50) mit einem ersten Steuereingang (16) der Bildspeichertaktzentrale (33) verbunden ist, an die auch der zweite Steuereingang (18) des Bildspeichers (7) führt,

daß dem Analog-Digital-Umsetzer (30) ein Demultiplexer (31) nachgeschaltet ist, dessen Steuereingang (52) mit einem ersten Ausgang (65) der Bildspeichertaktzentrale (33) verbunden ist, der die Halbbildtaktfrequenz liefert,

daß ein erster Ausgang des Demultiplexers (31) am Signaleingang (53) eines ersten Halbbildspeichers (34) und ein zweiter Ausgang des Demultiplexers (31) am Signaleingang (56) eines zweiten Halbbildspeichers (35) liegt,

daß der Steuereingang einer Einlesesteuerung (36) mit dem ersten Steuereingang (16) des Bildspeichers (7) verbunden ist und je ein Ausgang der Einlesesteuerung (36) mit einem ersten Steuereingang (54 bzw. 57) der beiden Halbbildspeicher (34, 35) verbunden ist,

daß der Steuereingang einer Auslesesteuerung (37) mit dem ersten die Abtastfrequenz liefernden Steuereingang (16) der Bildspeichertaktzentrale (33) und je ein Ausgang dieser Auslesesteuerung (37) mit einem zweiten Steuereingang (55 bzw. 58) der beiden Halbbildspeicher (34, 35) verbunden ist,

daß die Ausgänge der Halbbildspeicher (34, 35) auf jeweils einen Signaleingang (59, 60) eines Multiplexers (38) führen, dessen Steuereingang (61) an den ersten Steuereingang (16) der Bildspeichertaktzentrale (33) gelegt ist,

daß am Ausgang des Multiplexers (38) über einen Digital-Analogwandler (39) ein erster Eingang (62) einer Addierstufe (40) angeschlossen ist, an deren anderem Eingang (63) ein weiterer Ausgang (71) der Bildspeichertaktzentrale (33) liegt, der das zugehörige Synchrongemisch liefert,

daß an den Ausgang der Addierstufe (40) über den Empfänger-Tiefpaß (9) der Bildsignaleingang (68) eines Monitors (41) angeschlossen ist, der eine Einrichtung enthält, mit der der Wiedergabestrahl vertikal zusätzlich gewobbelt werden kann, und

daß der Wobbeleingang (69) des Monitors (41) mit dem ersten Eingang (16) der Bildspeichertaktzentrale (33) verbunden ist.

## Claims

1. Method for the compatible increase in resolution in television systems for monochrome and colour picture transmission, in which systems the luminance signal is generated line-by-line with interlacing in a signal source (1) and locally adjacent lines are after limitation in a low-pass filter (2) on the transmission side periodically scanned at a frequency $f_T$ synchronously with the line frequency in a transmission scanner (3), the periodically scanned signal is transmitted through a transmission channel (5), which displays a frequency fo at its Nyquist edge, and the half pictures are at the receception side stored digitally in two half picture stores (34, 35) separated according to their temporal occurrence and half picture elements in the form of lines or picture points are read out from one half picture store (34) alternately with half picture elements adjacent to these half picture elements and in the form of lines or picture points from the other half picture store (35) and these half picture elements (lines or picture points) are brought together in the sequence of their read-out so that a full picture arises, wherein the half picture elements (lines or picture points) brought together in the form of digital signals are converted in a digital-to-analog converter (39) into analog picture signals and the associated synchronising mixture is added, chacracterized by the following features:

a) at the transmission side, locally adjacent lines (1, 313 . . .) are scanned — horizontally displaced by half the scanning interval between two picture points — at a frequency $f_T$ of a line-coupled scanning cycle, which frequency is twice as high as the Nyquist frequency ($f_o$) of the transmission channel (5),

b) at the reception side, the received signal is scannes synchronously with the cycle on the transmission side, but displaced by the transit time of the transmission channel (5), the locally adjacent half picture elements (lines or picture points) are read out at twice the speed as for reading-in, wherein during the reading-out and in the sequence of the occurrence of new line contents, these new line contents are alternately read in at the respective signal inputs of both the half picture stores (34, 35) and — during the time of the reading-in of a new full picture — the half picture stores (34, 35) with their respective content are so read out twice that a full picture signal for the reproduction monitor arises and displays twice the number of lines at constant frame frequency, and a synchronising mixture at double line frequency and single frame frequency is added to the read-out image signals.

2. Method according to claim 1, characterized thereby, that lines are used es half picture elements for the generation of a full picture at double line frequency and single frame frequency.

3. Method according to claim 1, characterized thereby, that picture points are used as half picture elements for the generation of a full picture at double line frequency and single frame frequency and each line contains the picture points from two locally adjacent lines of the stored picture so that on a line scan in a reproduction monitor (10), the reproduction beam of which is additionally wobbled vertically, every second picture point appears at the associated place of a line, while the picture points lying therebetween are written displeced vertically in the locally adjacent line.

4. Circuit arrangement for the performance of a method for the compatible increase in resolution in television systems for monochrome and colour picture transmission according to one of the claims 1 to 3, in which systems the luminance signal of a signal source is scanned line-by-line with interlacing, a transmission scanner (3) is provided and in which an output of a pulse generator (4), which supplies a line-coupled scanning cycle at the frequency $f_T$, ist connected with the control input (13) of the transmission scanner (3) in such a manner that the transmission scanner (3) delivers scanning samples (3) during the first half picture and the scanning samples displaced relative to these by half a scanning interval during another half picture to a transmission channel (5), wherein a synchronising signal separator (8) and a reception scanner (6) lie at the signal input (14) of a receiver and the synchronising signal separator (8) is synchronised by synchronising pulses in the reception signal and scanning cycles are generated according to the pulse generator (4) in offset position at outputs, of which the first output is applied to the control input (15) of the receiver scanner (6) and to a first control input (16) of a picture store (7) and the second output is applied to a second control input (18) of the picture store (7) so that the input signal is read into the picture store (7) and read out synchronously twice as fast, characterized thereby, that at the transmission side, the luminance signal before the signal input (12) of the transmission scanner (3) runs through a low-pass filter which displays the frequency fo of the Nyquist edge as limit frequency, and that at the reception side, the output signal of the picture store (7) is conducted through a receiver low-pass filter (9), which displays twice the limit frequency of the transmitter low-pass filter (2), to a monitor (10).

5. Circuit arrangement according to claim 4, characterized thereby, that the picture store (7) at its signal input (17) displays an analog-to-digital converter (30), which converts the scanning values of the reception signal and the control input (50) of which is connected with the first control input (16) of the picture store synchronising signal separator (33), to which also the second control input (18) of the picture store (7) leads, that connected to follow the analog-to-digital converter (30) is a demultiplexer (31), the control input (52) of which is connected with a first output (65) of the picture store synchronising signal separator (33), which supplies the half picture cycle frequency, that a first output of the demultiplexer (31) lies at the signal input (53) of a first half picture store (34) and a second output of the demultiplexer (31) lies at the signal input (56) of a second half picture store (35), that the control input of a read-in control (36) is connected with the first control input (16) of the picture store (7) and a respective output of the read-in control (36) is connected with a first control input (54 or 57) of both the half picture stores (34, 35), that the control input of a read-out control (37) is connected with a second output (64) of the picture store synchronising signal separator (33), of the one read-out frequency, and a respective output of this read-out control (37) is connected with a second control input (55 or 58) of both the half picture stores, that the outputs of the half picture stores (34, 35) lead to a respective signal input (59, 60) of a multiplexer (38), the control input (61) of which is connected with a third output (66) of the picture store synchronising signal separator (33), which supplies the line frequency, that the output of the multiplexer (38) is connected through a digital-to-analog converter (39) to a first input (62) of an adding stage (40), to the other input (63) of which is applied a fourth output (67) of the picture store synchronising signal separator (33), which supplies the associated synchronising mixture.

6. Circuit arrangement according to claim 4, characterized thereby,
that the picture store (7) at its signal input (17) displays an analog-to-digital converter (30), which converts the scanning values of the reception signal and the control input (50) of which is connected with the first control input (16) of the picture store synchronising signal separator (33), to which also the second control input (18) of the picture store (7) leads,
that connected to follow the analog-to-digital converter (30) ist a demultiplexer (31), the control input (52) of which is connected with a first output (65) of the picture store synchronising signal separator (33), which supplies the half picture cycle frequency,
that a first output of the demultiplexer (31) lies at the signal input (53) of a first half picture store (34) and a second output of the demultiplexer (31) lies at the signal input (56) of a second half picture store (35),
that the control input of a read-in control (36) is connected with the first control input (16) of the picture store (7) and a respective output of the read-in control (36) is connected with a first control input (54 or 57) of both the half picture stores (34, 35),
that the control input of a read-out control (37) is connected with the first control input (16), which supplies the scanning frequency, of the picture store synchronising signal separator (33) and a respective output of this read-out control (37) is connected with a second control input (55 or 58) of both the half picture stores,
that the outputs of the half picture stores (34, 35) lead to a respective signal input (59, 60) of a multiplexer (38), the control input (61) of which is applied to the first control input (16) of the picture store synchronising signal separator (33),
that the output of the multiplexer (38) is connected through a digital-to-analog converter (39) to a first input (62) of an adding stage (40), to the other input (63) of which lies a further output (71) of the picture store synchronising signal separator (33), which supplies the associated synchronising mixture,
that the output of the adding stage (40) is connected through the receiver low-pass filter (9) to the picture signal input (68) of a monitor (41), which contains an equipment, by which the reproduction beam can additionally be wobbled vertically and
the wobble input (69) of the monitor (41) is connected with the first input (16) of the picture store synchronising signal separator (33).

## Revendications

1. Procédé pour augmenter de façon compatible la résolution ou définition dans les systèmes de télévision pour la transmission d'images en noir et blanc et en couleurs, dans lesquels le signal de luminance est produit ligne par ligne avec entrelacement de lignes dans une source de signal (1) et, après limitation dans un filtre passe-bas (2) côté émission, des lignes localement voisines sont explorées périodiquement avec une fréquence fT synchrone avec la fréquence de ligne dans un analyseur d'émission (3) et le signal exploré périodiquement est transmis par un canal de transmission (5) qui présente une fréquence fo à son flanc de Nyquist, et dans lesquels, côté réception, les trames, après leur apparition chronologique, sont mémorisées sous forme numérique en deux mémoires de trame (34, 35), des éléments de trame sous forme de lignes ou de points d'image sont lus ou extraits alternativement d'une mémoire de trame (34) et des éléments de trame sous forme de lignes ou de points d'image voisins des éléments de trame mentionnés en premier sont extraits de l'autre mémoire de trame (35) et ces éléments de trame (lignes ou points d'image) sont assemblés dans l'ordre de leur lecture, de sorte qu'il se forme une image complète, les éléments de trame (lignes ou points d'image) assemblés sous forme de signaux numériques étant transformés dans un convertisseur N/A (39) en signaux d'image analogiques, auxquels est ajouté le mélange de synchronisation correspondant, caractérisé en ce que:

a) côte émission, des lignes localement vioisines (1, 313) sont explorées, etant décalées horizontalement de la moitié de l'intervalle d'exploration entre deux points d'image, avec une fréquence fT, qui est celle d'un top d'exploration couplé aux lignes, qui est le double de la fréquence de Nyquist fo du canal de transmission (5),
b) côté réception, le signal reçu est exploré en synchronisme avec le rythme côté émission mais avec un décalge qui correspond au temps de transit du canal de transmission (5), les éléments de trame (lignes ou points d'image) sont lus ou extraits à une vitesse double de la vitesse de mise en mémoire et pendant la lecture dans l'ordre d'apparition de nouveaux contenus de lignes, ces nouveaux contenus de lignes sont alternativement introduits par leurs entrées de signal dans les deux mémoires de trame (34, 35) et, pendant le temps de l'introduction d'une nouvelle image complète, le contenu momentané des mémoires de trame (34, 35) est lu deux fois, de qui donne un signal d'image complète, pour le moniteur de reproduction, qui présente le double nombre de lignes, la fréquence d'image restant la même, et aux signaux d'image extraits est ajouté un mélange de synchronisation à double fréquence de ligne et simple fréquence d'image.

2. Procédé selon la revendication 1, caractérisé en ce que, pour produire une image complète à double fréquence de ligne et simple fréquence d'image, on utilise des lignes comme éléments de trame.

3. Procédé selon la revendication 1, caractérisé en ce que pour produire une image complète à double nombre de lignes, on utilise des points d'image comme éléments de trame et chaque ligne contient les ponts d'image de deux lignes localement voisines de l'image mémorisée, si bien que, dans un moniteur de reproduction (10), dont le faisceau de reproduction est en outre balayé dans le sens vertical, lors d'un passage de lignes, chaque deuxième point d'image apparaît à l'endroit correspondant d'une ligne, tandis que les points d'image intermédiaires sont inscrits dans la ligne localement voisine avec un décalage dans le sens vertical.

4. Montage destiné à la mise en oeuvre d'un procédé pour augmenter de façon compatible la résolution ou définition dans les systèmes de télévision pour la transmission d'images en noir et blanc et en couleurs, selon une des revendications 1 à 3, dans lesquels le signal de luminance d'une source de signal est exploré ligne par ligne avec entrelacement de lignes, dans lesquels est prévu un analyseur d'émission (3) et dans lesquels une sortie d'un générateur de signaux de synchronisation (4), qui délivre un top d'exploration avec la fréquence fT couplée aux lignes, est reliée à l'entrée de commande (13) de l'analyseur d'émission (3), de manière que l'analyseur d'émission (3) délivre des échantillons d'exploration pendant la première trame et des échantillons d'exploration, décalés par rapport à ceux-ci d'un demi-intervalle d'exploration, pendant une autre trame, les échantillons étant délivrés à un canal de transmission (5), l'entrée de signal (14) d'un récepteur étant reliée qa une centrale de synchronisation (8) et un analyseur de récepteur (6), la centrale (8) étant synchronisée par des impulsions de synchronisation dans le signal reçu et produisant, conformément au générateur de signaux de synchronisation (4), des tops d'exploration en position décalée sur des sorties, dont la première est reliée à l'entrée de commande (15) de l'analyseur de récepteur (6) et à une première entrée de commande (16) d'une mémoire d'image (7) et dont la deuxième sortie est reliée à une deuxième entrée de commande (18) de la mémoire d'image (7), de manière que le signal d'entrée soit introduit dans la mémoire d'image (7) et soit lu ou extrait de cette mémoire de façon synchrone mais au double de la vitesse, caractérisé en ce que, côté émission, le signal de luminance, en amont de l'entrée de signal (12) de l'analyseur d'émission (3), traverse un filtre passe-bas dont la fréquence limite est la fréquence fo du flanc de Nyquist et en ce que, côté réception, le signal de sortie de la mémoire d'image (7) est appliqué à un moniteur (10) à travers un filtre passe-bas de récepteur (9) dont la fréquence limite est le double de celle du filtre passe-bas d'émetteur (2).

5. Montage selon la revendication 4, caractérisé en ce que:
la mémoire d'image (7) présente à son entrée de signal (17) un convertisseur analogique/numérique (30) qui convertit les valeurs d'exploration du signal reçu et dont l'entrée de commande (50) est reliée à la première entrée de commande (16) de la centrale de synchronisation de mémoire d'image (33), à laquelle est reliée également la deuxième entrée de commande (18) de la mémoire d'image (7),
le convertisseur analogique/numérique (30) est suivi d'un démultiplexeur (31), dont l'entrée de commande (52) est reliée à une première sortie (65) de la centrale de synchronisation de mémoire d'image (33), laquelle fournit la fréquense de trame,
une première sortie de démultiplexeur (31) est connectée à l'entrée de signal (53) d'une première mémoire de trame (34) et une deuxième sortie du démultiplexeur (31) est connectée à l'entrée de signal (56) d'une deuxième mémoire de trame (35),
l'entrée de commande d'un dispositif de commande d'introduction ou de mémorisation (36) est reliée à la première entrée de commande (16) de la mémoire d'image (7) et une sortie de ce dispositif de commande est reliée à chaque fois à une première entrée de commande (54 respectivement 57) des deux mémoires de trame (34, 35),
l'entrée de commande d'un dispositif de commande de lexture ou d'extraction (37) est reliée à une deuxième sortie (64) de la centrale de synchronisation de mémoire d'image (33), laquelle délivre une fréquence de lecture, et une sortie de ce dispositif de commande (37) est reliée à chaque fois à une deuxième entrée de commande (55 respectivement 58) des deux mémoires de trame,
les sorties des mémoires de trame (34, 35) sont reliées chaque fois à une entrée de signal (59, 60) d'un multiplexeur (38), dont l'entrée de commande (61) est connectée à une troisième sortie (66) de la centrale de synchronisation de mémoire d'image (33), laquelle délivre la fréquence de ligne et
la sortie du multiplexeur (38) est connectée à travers un convertisseur numérique/analogique (39) à une première entrée (62) d'un étage additionneur (40), à l'autre entrée (63) duquel est connectée une quatrième sortie (67) de la centrale de synchronisation de mémoire d'image (33), laquelle délivre le mélange de synchronisation correspondant.

6. Montage selon la revendication 4, caractérisé en ce que:
la mémoire d'image (7) présente à son entrée de signal (17) un convertisseur analogique/numérique (30) qui convertit les valeurs d'exploration du signal reçu et dont l'entrée de commande (50) est reliée à la première entrée de commande (16) de la centrale de synchronisation de mémoire d'image (33), à laquelle est reliée également la deuxième entrée de commande (18) de la mémoire d'image (7),

le convertisseur analogique/numérique (30) est suivi d'un démultiplexeur (31), dont l'entrée de commande (52) est reliée à une première sortie (65) de la centrale de synchronisation de mémoire d'image (33), laquelle fournit la fréquence de trame,

une première sortie du démultiplexeur (31) est connectée à l'entrée de signal (53) d'une première mémoire de trame (34) et une deuxième sortie du démultiplexeur (31) est connectée à l'entrée de signal (56) d'une deuxième mémoire de trame (35),

l'entrée de commande d'un dispositif de commande d'introduction ou de mémorisation (36) est reliée à la première entrée de commande (16) de la mémoire d'image (7) et une sortie de ce dispositif de commande est reliée à chaque fois à une première entrée de commande (54 respectivement 57) des deux mémoires de trame (34, 35),

l'entrée de commande d'un dispositif de commande de lecture ou d'extraction (37) est connectée à la première entrée de commande (16) — délivrant la fréquence d'analyse — de la centrale de synchronisation de mémoire d'image (33) et une entrée de ce dispositif de commande (37) est connectée chaque fois à une deuxième entrée de commande (57 respectivement 58) des deux mémoires de trame (34, 35),

les sorties des mémoires de trame (34, 35) sont connectées chacune à une entrée de signal (59, 60) d'un multiplexeur (38), dont l'entrée de commande (61) est reliée à la première entrée de commande (16) de la centrale de synchronisation de mémoire d'image (33),

la sortie du multiplexeur (38) est reliée à travers un convertisseur numérique/analogique (39) à une première entrée (62) d'un étage additionneur (40), à l'autre entrée (63) duquel est reliée une sortie supplémentaire (71) de la centrale de synchronisation de mémoire d'image (33), laquelle délivre le mélange de synchronisation correspondant,

la sortier de l'étage additionneur (40) est reliée à travers le filtre pass-bas de récepteur (9) à l'entrée de signal d'image (68) d'un moniteur (41), lequel contient un dispositif par lequel le faisceau de reproduction peut en plus être balayé verticalement, et

l'entrée de balayage (69) du moniteur (41) est reliée à la première entrée (16) de la centrale de synchronisation de mémoire d'image (33).

# FIG. 1

Sender

Übertr. - Kanal

Empfänger

0 026 395

FIG. 2

FIG. 3

FIG.4

FIG.5

# FIG. 6

Zeile

Zeilenraster (gewobbelt)

FIG. 7

FIG. 8